# EUROPEAN PATENT APPLICATION

(11) **EP 2 034 754 A1**
(43) Date of publication of application: **11.03.2009**
(21) Application number: 07744347.1
(22) Date of filing: 29.05.2007
(51) Int. Cl.: H04Q 7/34, H04L 12/56

(54) **COMMUNICATION DEVICE**

(30) Priority: 02.06.2006 JP 2006154638
(71) Applicant: Sharp Kabushiki Kaisha, Osaka-shi, Osaka 545-8522 (JP)
(72) Inventor: ARAMOTO, Masafumi, Tokyo 135-0042 (JP)
(74) Representative: Müller - Hoffmann & Partner
(86) International application number: PCT/JP2007/060928
(87) International publication number: WO 2007/142085

(57) **Abstract**

In a procedure of cancelling a location registration in accordance with the Mobile IPv6, when a mobile communication terminal (MN) cannot receive a response to a request for cancelling the location registration, both a location-management apparatus (HA) and a communication apparatus (CN) that is a communication correspondent of the mobile communication terminal have completed processes of cancelling the location registration, but the mobile communication terminal (MN) has not completed processes of cancelling the location registration. As a consequence, the communications cannot be continued. A MN 25 transmits a BU (seq N) 151 to a HA 23. The HA 23 is **characterized by** being controlled so that the HA 23 will transmit a BA to the MN 25 whenever the HA 23 receives the BU 151. In this case, the HA 23 is designed to transmit a BA 161 to the MN 25 irrespective of whether the HA 23 has completed processes 158 of cancelling the location registration when the HA 23 receives a BU 157 that the MN 25 has transmitted to request the cancellation of the location registration. Accordingly, upon receipt of the BA, the MN 25 deletes the Binding Update List, and thus can complete the processes of cancelling the location registration. Subsequently, the MN transmits a new message representing the completion of the processes of cancelling the location registration in response to the BA transmitted from the HA/CN as a response for cancelling the location registration. When the HA/CN receives, from the MN, the message representing the completion of the processes of cancelling the location registration, the HA/CN executes the processes of cancelling the location registration. When the MN detects an abnormal state where the HA/CN has completed the processes of cancelling the location registration but the MN has not, the MN completes the processes of cancelling the location registration.

## Description

### Technical Field

The present invention relates to a communication technique, and particularly relates to a technique for managing the locations of a mobile node, a location-management node and a node that is a communication correspondent for the mobile node, in a communication network in which movements of nodes are to be controlled.

### Background Art

Mobile IPv6 standard is defined as a standard for a communication technique that includes a mobile node. The Mobile IPv6 standard is RFC 3775 that is standardized by the mip6 WG of the IETF (Internet Engineering Task Force). The specifications of the Mobile IPv6 are given in RFC 3775 (see Non-Patent Document 1).

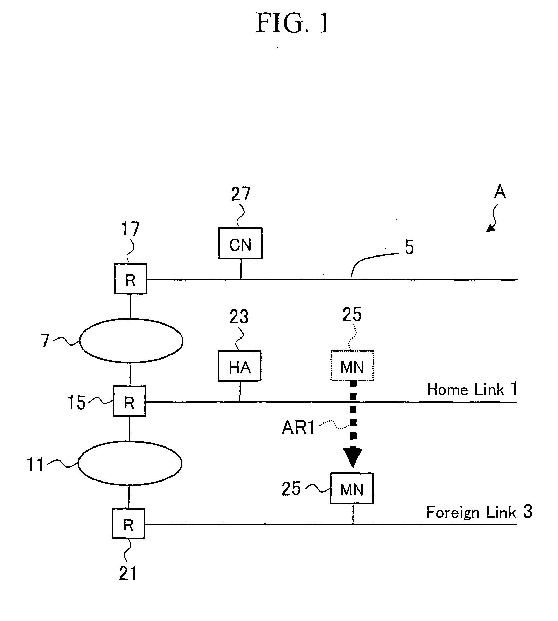

Fig. 1 is a diagram illustrating a basic model of the Mobile IPv6 standard. As shown in Fig. 1, a basic model A has a uniquely-given address in a network of a home link 1 that is defined as a link including a mobile node (MN) 25 and a home agent (HA) 23 that is a node managing location information of the MN 25. The MN 25 moves, as indicated by the arrow AR1 in Fig. 1, to a foreign link, for example, a foreign link 3, defined as the destination of the MN 25.

A correspondent node CN 27 is defined as a correspondent communication apparatus for the MN 25, and is located in a link 5. The correspondent node CN 27 is located in a link 5. The home link 1, the foreign link 3, and the link 5 are connected to one another through networks 7 and 11 by routers 15, 17, and 21.

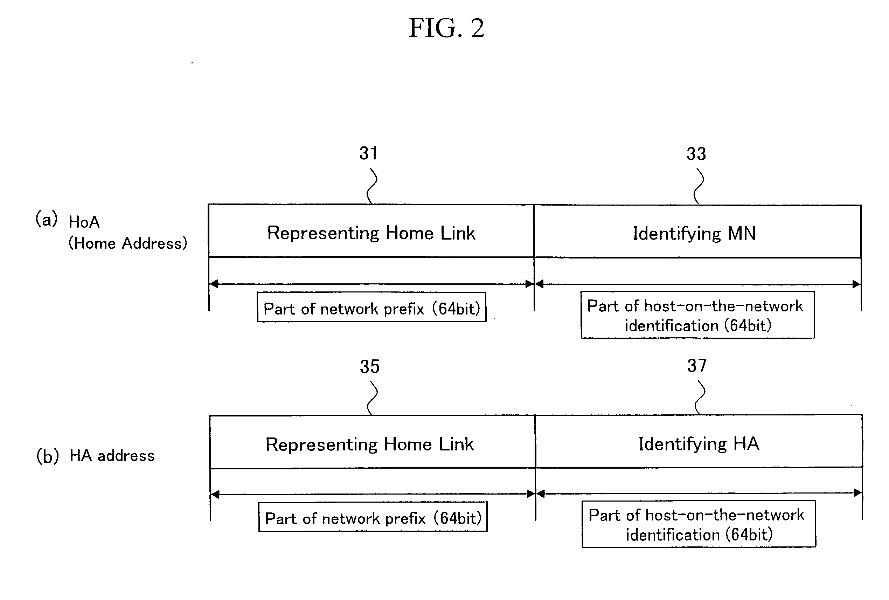

Fig. 2 is a diagram illustrating address structures. Part (a) of Fig. 2 illustrates the address structure of a HoA, and Part (b) of Fig. 2 illustrates the address structure of a HA. The HoA that Part (a) of Fig. 2 shows is defined as the address that is given uniquely to the MN 25. The network prefix of the HoA includes: a part of network prefix 31 representing the home link 1; and a part of host-on-the-network identification 33 for identifying the MN 25. The HA address that Part (b) of Fig. 2 shows includes: a part of network prefix 35 representing the home link 1; and a part of host-on-the-network identification 37 for identifying the HA. The network prefix 31 of the HoA is identical to the network prefix 35 shown in the address of the HA.

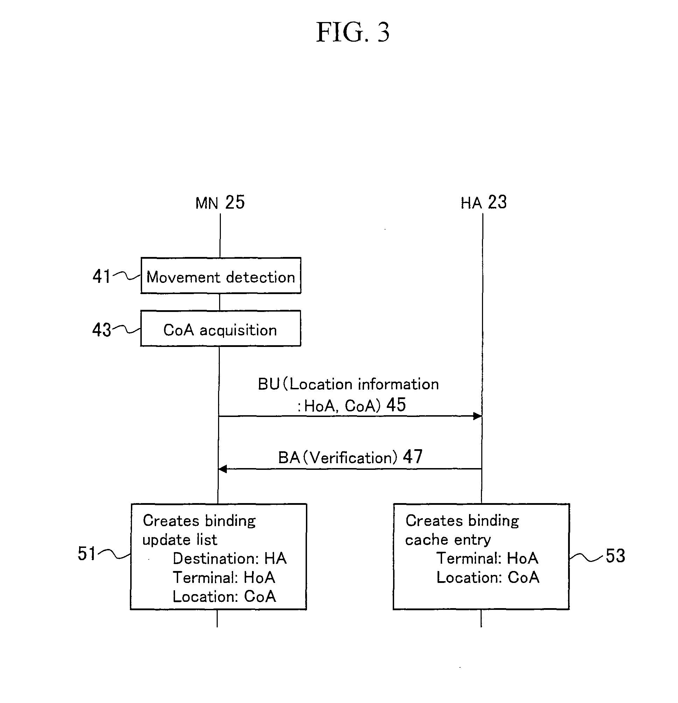

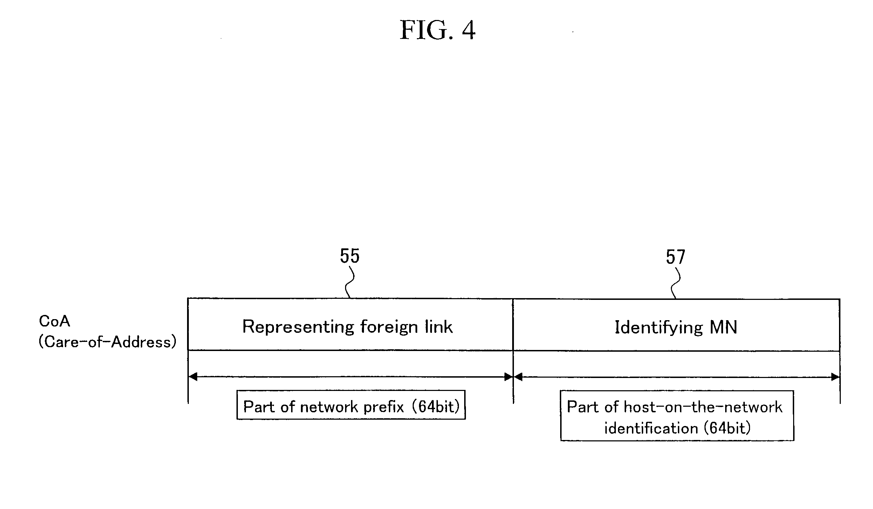

Subsequently, description will be given of a sequence of location-registration processes into the location-managing home agent HA. When the MN 25 is connected to the foreign link 3 shown in Fig. 1, the location of the MN is registered into the HA 23. Hereafter, the location registration into the HA 23 is referred to as Home Registration. Fig. 3 is a diagram illustrating the sequence of home registration. Firstly, the connection of the MN 25 to the foreign link 3 is detected (movement detection 41). The MN25 acquires, in the foreign link 3, an address including: a network prefix representing the destination link; and information identifying the MN 25 itself (CoA acquisition: 43). The address thus acquired is defined as a CoA (Care-of-address). Fig. 4 is a diagram illustrating the address structure of a CoA. The CoA address structure that Fig. 4 shows includes: a part of network prefix 55 representing the foreign link; and a part of host-on-the-network identification 57 for identifying the MN 25. The MN 25 requests the registration of its location by transmitting, to the HA, location information including the HoA and the CoA with a BU (Binding Update) message. The HoA is used as the information for identifying the MN 25 while the CoA is used as the information for identifying the destination of the MN 25.

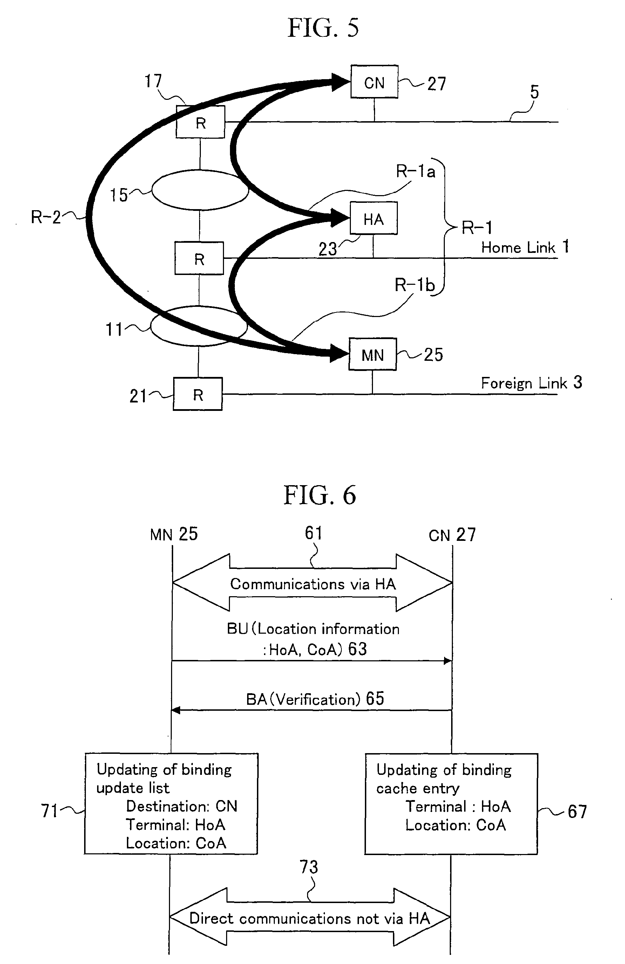

Subsequently, the HA 23 receives the BU, and returns, for the purpose of verification, a BA (Binding Acknowledgement) message (47). After the transmission of the BA, the HA 23 creates the information on the HoA and the CoA of the MN (53), and manages the information with a Binding Cache Entry. After the reception of the BA, the MN 25 manages with a Binding Update List (51) the information on: the address of the HA 23, to which the transmission of the BU is destined; the terminal HoA; and the location CoA. The above-mentioned processes are for the Home Registration. Fig. 5 is a diagram illustrating communication-route options in the configuration shown in Fig. 1. As Fig. 5 shows, two routes are used in the communications between the MN 25 and the CN 27. The MN 25 and the CN 27 communicate with each other by way of the HA 23 before the location information about MN 25 is registered into the CN 27 (R-1a and R1b). Once the processes of the location registration into the CN 27 have been completed, the MN 25 and the CN 27 communicate with each other directly, not by way of the HA 23 (R-2).

Fig. 6 is a diagram illustrating the sequence of processes for location registration into the CN 27. The MN 25 and the CN 27 carry out communications 61 by way of the HA 23. After the completion of the Home Registration, the MN 25 requests the registration of its location by transmitting, to the CN 27, the information including the HoA and the CoA with a BU (Binding Update) message (63). The BU is a signaling message defined in the Mobile IPv6 and used in the registration of location, and includes the HoA and the CoA. The BA (Binding Acknowledgement) message is a signaling message defined in the Mobile IPv6 and used for responding to the BU. The HoA is used as the information for identifying the MN 25 while the CoA is used as the information for identifying the destination of the MN 25.

The CN 27 receives the BU, and returns, for the purpose of verification, a BA (Binding Acknowledgement) message (65). After the transmission of the BA, the CN 27 manages the information on the HoA and the CoA of the MN with a Binding Cache Entry 67. After the reception of the BA, the MN 25 manages the information on: the address of the CN 27, to which the transmission of the BU is destined; the terminal HoA; and the location CoA with a Binding Update List 71.

After that, the MN 25 and the CN 27 carry out direct communications 73 not by way of HA 23. The above-mentioned processes are for the location registration into the CN 27. The MN 25 and the CN 27 communicate with each other by way of the HA 23 from the detection of the movement of the MN 25 until the completion of the location registration. Once the processes of the location registration into the CN 27 have been completed, the MN 25 and the CN 27 communicate with each other directly, not by way of the HA 23.

Subsequently, description will be given of a method of cancelling the location registration. In the sequence of cancelling the location registration defined in the Mobile IPv6, the location-management node that receives the request, from the mobile node, for the cancelling of the registration, and the node that is a communication correspondent for the mobile node receive the request for the cancelling even after the completion of the cancelling processes, and respond to the mobile node. The MN 25 requests the HA 23 to cancel the location registration under the following conditions.

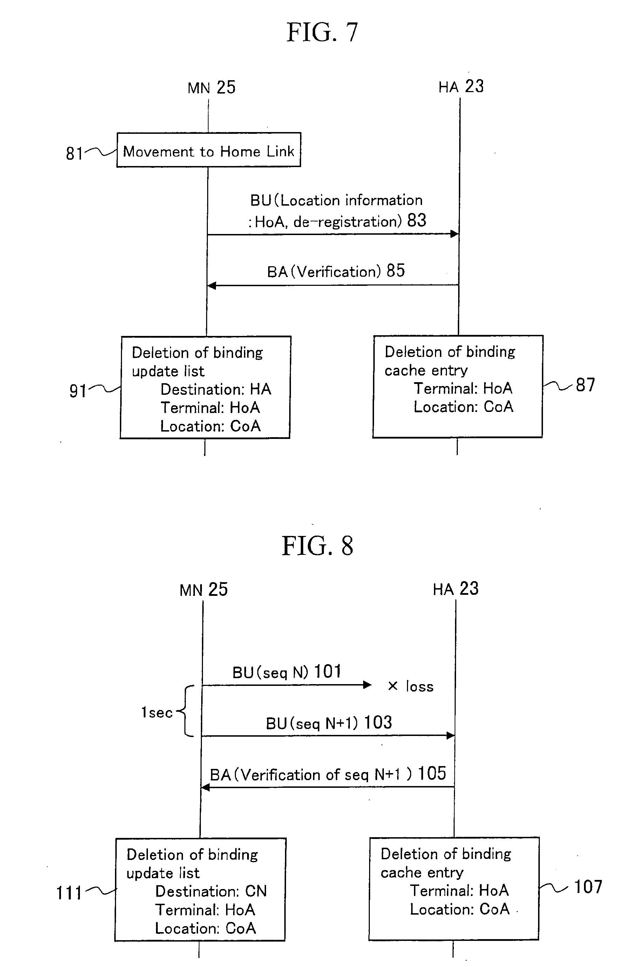

When the MN 25 moves to the home link, the MN 25 transmits a BU to the HA 23. Fig. 7 illustrates the sequence of cancelling the location registration at the time when the MN 25 in the foreign link ceases to behave as the MN 25 of the Mobile IPv6 and begins to behave as an ordinary node of the IPv6. As Fig. 7 shows, when the MN 25 moves to the home link (81), the MN 25 transmits, to the HA 23, a BU with the information representing the cancelling of the location registration added thereto (83). The HA 23 returns a BA 85 in response to the BU 83. The HA 23 deletes the Binding Cache Entry for the MN 25 (87). The MN 25 receives the BA, and deletes the Binding Update List for the HA (91). These are the processes to be carried out when the location registration in the HA 23 is to be cancelled.

Note that the MN can request the CN to cancel the location registration under the following conditions (at the following timings):

1) At the time when the MN moves to the home link; and
2) At an arbitrary timing during the direct communications not by way of HA between the MN in the foreign link and the CN.

In addition, the sequence of cancelling the location registration is performed, as in the case of requesting the HA to cancel the location registration, by transmitting a BU and receiving a BA, and by deleting the Binding Cache Entry for the MN and the Binding Update List for the CN.

### Disclosure of the Invention

### Problems to be Solved by the Invention

Fig. 8 is a diagram illustrating an exemplar sequence of the above-described processes of cancelling the location registration (de-registration). Note that when the MN 25 transmits a BU but does not receive a BA, the MN 25 is defined to transmit the BU again. The first re-transmission is defined to be performed after the reception of the BU, and, after that, the re-transmission is defined to be consecutively performed until a predetermined time has passed.

As exemplar abnormality processes related to the above-mentioned processes, description will be given of the cases under the following conditions:

1) A case where the BU transmitted from the MN does not arrive at the HA/CN; and
2) A case where the HA/CN receives the re-transmitted BU from the MN before the HA/CN transmits the BA.

The sequences for the above-mentioned two conditions are the same. Fig. 8 is a diagram illustrating an exemplar sequence for the case where a packet loss for the BU transmitted from the MN occurs in the communications between the MN and the HA. Firstly, the MN 25 transmits a first BU to the HA 23 (101). The BU includes a sequence number (seq N). Now assume that the BU 101 has been lost for some reasons before the BU 101 arrives at the HA 23 (loss). Since the MN 25 has not received the BA, the MN 25 transmits another BU (seq N+1) 103 with an incremented sequence number one second after the transmission of the BU (101). The HA 23 receives the re-transmitted BU 103, and returns a BA for the received BU with the sequence number of N+1 (105). After the transmission of the BA (verification of seq N+1), the HA 23 deletes the Binding Cache Entry for the MN 25 (107). After the reception of the BA, the MN 25 deletes the Binding Update List for the HA 23 (111). In this case, the de-registration processes are carried out both by the MN and the HA, and the processes of cancelling the location registration are completed. Note that what has been described in this example is an abnormality that occurs in the cancelling of the location registration by the MN and the HA. Similar processes are carried out also in the case of the CN.

Description will be given below of an example of abnormal processes for a case where a problem occurs in the above-described processes. The example of abnormal processes in question here is a case of the following conditions:

1) A BA transmitted from the HA/CN does not arrive at the MN; and
2) Another BU as a re-transmitted BU is transmitted between the transmission of the BA by the HA/CN and the arrival of the BA thus transmitted at the MN.

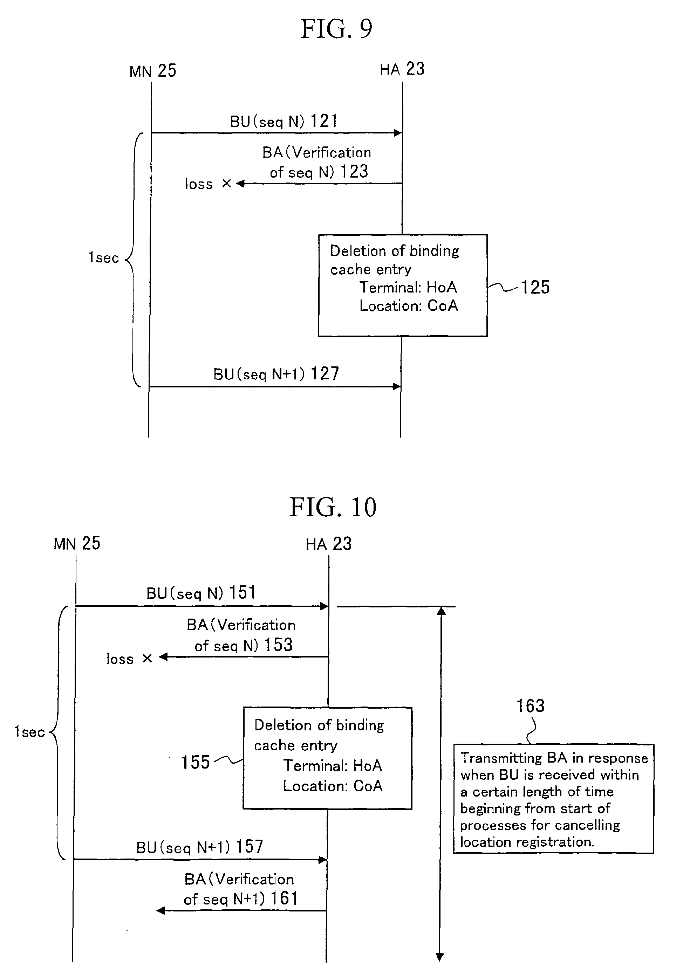

The sequences for the above-mentioned two conditions are the same. Fig. 9 is a diagram illustrating an exemplar sequence for the case where a packet loss for the BA transmitted from the HA occurs in the communications between the MN and the HA. Firstly, the MN 25 transmits a first BU (N) to the HA 23 (121). The Bu includes a sequence number (N). The HA 23 receives the first BU, and transmits a BA in response to the BU (123). After the transmission of the BA 123, the HA 23 deletes the Binding Cache Entry 125 for the MN 25 (125). Since the MN 25 has not received the BA 123, the MN 25 transmits another BU (seq N+1) with an incremented sequence number (127). Now that the process of cancelling the location registration has been completed and that the Binding Cache Entry 125 has been deleted, the HA 23 does not transmit a BA in response to the re-transmitted BU. With the sequence described above, the MN 25 has not completed the process of cancelling the location registration and continues to keep the Binding Update List. Note that what has been described in this example is an abnormality that occurs in the cancelling of the location registration by the MN 25 and the HA 23. Similar processes are carried out also in the case of the CN.

In a case such as the one described above where the processes of cancelling the location registration have been completed by the HA/CN but not by the MN 25, the following problems will occur.

1) In a case where an abnormality in the sequence occurs between the HA 23 and the MN 25 that is changing its location to the home link:
1-1) A packet transmitted from the CN to the MN by way of the HA is not transmitted forward from the HA 23, since the HA 23 determines that the movement of the MN 25 to the home link has been completed. As a consequence, the MN 25 cannot receive the packet.

1-2) Regarding a packet transmitted from the MN to the CN by way of the HA, it is determined that the current location of the MN is in the foreign link. Nevertheless, in a case where it is impossible to transmit the packet in accordance with the transmission method from the foreign link or even in a case where the packet is transmitted, a message indicating that an abnormality occurs is transmitted to the MN at the time of the packet's arrival at the HA. As a consequence the packet cannot arrive at the CN.

1-3) A packet transmitted from the CN directly to the MN not by way of the HA:
Since the CN does not determine that the MN has moved to the home link, the CN transmits the packet to the foreign link where the MN was located before the movement. As a consequence, the MN cannot receive the packet.

1-4) A packet transmitted from the MN directly to the CN not by way of the HA:
It is determined that the current location of the MN is in the foreign link. Nevertheless, in a case where it is impossible to transmit the packet in accordance with the transmission method from the foreign link or even in a case where the packet is transmitted, a message indicating that an abnormality occurs is transmitted to the MN from the HA or the router. As a consequence the packet cannot arrive at the CN.

2) In a case where an abnormality in the sequence occurs between the HA and the MN that is currently in the foreign link:
2-1) Regarding a packet transmitted from the CN to the MN by way of HA, the same problem occurs as in the case of the above-described 1-1);

2-2) Regarding a packet transmitted from the MN to the CN by way of HA, the same problem occurs as in the case of the above-described 1-2);

2-3) Regarding a packet transmitted from the CN directly to the MN not by way of HA, the packet can be transmitted and received normally. Accordingly there is no problem in this case; and

2-4) Regarding a packet transmitted from the MN directly to the CN not by way of HA, the packet can be transmitted and received normally. Accordingly there is no problem in this case.

3) In a case where an abnormality in the sequence occurs between the HA and the MN that is changing its location to the home link:
3-1) Regarding a packet transmitted from the CN to the MN by way of HA, the packet can be transmitted and received normally. Accordingly there is no problem in this case;

3-2) Regarding a packet transmitted from the MN to the CN by way of HA, the packet can be transmitted and received normally. Accordingly there is no problem in this case;

3-3) Regarding a packet transmitted from the CN directly to the MN not by way of HA, the CN determines that the MN has moved to the home link, and does not transmit the packet by way of this route. Accordingly, there is no problem in this case; and

3-4) Regarding a packet transmitted from the MN directly to the CN not by way of HA, it is determined that the current location of the MN is in the home link. Nevertheless, since the processes of cancelling the location registration for the CN has not been completed, the MN tries to transmit the packet by the transmission method in the foreign link. In a case where it is impossible to transmit the packet in accordance with the transmission method from the foreign link or even in a case where the packet is transmitted, a message indicating that an abnormality occurs is transmitted to the MN from the HA or the router. As a consequence the packet cannot arrive at the CN.

4) In a case where an abnormality in the sequence occurs between the CN and the MN that is currently in the foreign link:
4-1) Regarding a packet transmitted from the CN to the MN by way of HA, the packet can be transmitted and received normally. Accordingly there is no problem in this case;

4-2) Regarding a packet transmitted from the MN to the CN by way of HA, the packet can be transmitted and received normally. Accordingly there is no problem in this case;

4-3) Regarding a packet transmitted from the CN directly to the MN not by way of HA, the CN determines that the MN has moved to the home link, and does not transmit the packet by way of this route. Accordingly, there is no problem in this case; and

4-4) Regarding a packet transmitted from the MN directly to the CN not by way of HA, since the MN has not completed the processes of cancelling the location registration for the CN, the MN tries to transmit the packet by the transmission method in the foreign link. Though the packet thus transmitted arrives at the CN, the CN has already completed the processes of cancelling the location registration. Accordingly, in response to the packet having been transmitted not by way of the HA, the CN transmits a message indicating that an abnormality occurs, while the CN does not receive the packet.

As has been described thus far, an abnormality that occurs in the processes of cancelling the location registration causes a problem of discontinuation of the communication between the MN and the CN. Suppose a case where the loss of a packet of a BA, the delay that occurs in the network, the processing time in the HA or in the MN, or the like causes an abnormal sequence. In this case, the HA deletes the Binding Cache Entry after the transmission of the BA, and determines that the current location of the MN is in the home link. Meanwhile, the HA does not execute the process responding to the reception of the BU (seq N+1). Accordingly, the MN cannot receive the BA, which causes a problem of incompletion of the processes for the movement to the home link.

Objects of the present invention are to solve the above-mentioned problems and to let the communications between the MN and the CN continue.

### Means for Solving the Problems

The present invention achieves the above-mentioned objects in the following way. The problems are caused by the combination of the incompletion of the cancelling of the location registration in the MN and the completion thereof both in the HA and the CN. To counter this, a de-registration BU is made to be received in any case and a BA is made to be transmitted in return. In addition, a BU that may be transmitted again is allowed to be received for a certain period of time after the reception of a de-registration BU. When such a re-transmission of the BU takes place, a BA is transmitted in return.

### Specifically:

1) Even after the deletion of the Binding Cache Entry by the HA through the de-registration processes, the HA receives a de-registration BU and transmits a BA in response to the de-registration BU;

2) Even after the deletion of the Binding Cache Entry by the CN through the de-registration processes, the CN receives a de-registration BU and transmits a BA in response to the de-registration BU;

3) In the de-registration processes, the deletion of the Binding Cache Entry by the HA is either postponed for a certain length of time or cancelled permanently. In addition, the HA receives a de-registration BU that comes after that, and transmits a BA in response; and

4) In the de-registration processes, the deletion of the Binding Cache Entry is either postponed for a certain length of time or cancelled permanently. In addition, the HA receives a de-registration BU that comes after that, and transmits a BA in response.

### Effects of the Invention

In the procedure of cancelling the location registration into a node for managing the location of a mobile node, and into a node that is a communication correspondent for the mobile node, what is made possible according to the present invention is to eliminate a possible state where the location-management node or the correspondent node has completed the processes of cancelling the location registration and the movable node has not completed the processes of cancelling the location registration. Accordingly, the state of incompletion of the processes of cancelling the location registration can be prevented from making the communications impossible.

### Brief Description of the Drawings

[Fig. 1] Fig. 1 is a diagram illustrating a basic model of the Mobile IPv6 standard.
[Fig. 2] Figs. 2A and 2B are diagrams illustrating the address structure in a Mobile IPv6 communication system. Fig. 2A illustrates the address structure of a HoA. Fig. 2B illustrates the address structure of a HA.
[Fig. 3] Fig. 3 is a diagram illustrating the sequence of processes for home registration.
[Fig. 4] Fig. 4 is a diagram illustrating the address structure of a CoA.
[Fig. 5] Fig. 5 is a diagram illustrating communication-route options in the configuration shown in Fig. 1.
[Fig. 6] Fig. 6 is a diagram illustrating the sequence of processes for location registration into a CN 27.
[Fig. 7] Fig. 7 is a diagram illustrating the sequence of cancelling the location registration at the time when a MN 25 in a foreign link ceases to behave as a MN 25 of the Mobile IPv6 and begins to behave as an ordinary node of the IPv6.
[Fig. 8] Fig. 8 is a diagram illustrating an exemplar sequence of the above-described processes of cancelling the location registration (de-registration).
[Fig. 9] Fig. 9 is a diagram illustrating an exemplar sequence for the case where a packet loss for a BA transmitted from the HA occurs in the communications between the MN and the HA.
[Fig. 10] Fig. 10 is a diagram illustrating a sequence for a communication system according to a first embodiment of the present invention.
[Fig. 11] Fig. 11 is a diagram illustrating a sequence for a communication system according to a second embodiment of the present invention.
[Fig. 12] Fig. 12 is a diagram illustrating a sequence for a communication system according to a third embodiment of the present invention.
[Fig. 13] Fig. 13A is a functional block diagram illustrating a configuration example of the MN. Fig. 13B is a functional block diagram illustrating a configuration example of the HA.
[Fig. 14] Fig. 14 is a functional block diagram illustrating a configuration example of a CN.

### Description of Symbols

A...a basic model of a Mobile IPv6 standard; 1... home link; 3... foreign link; 5...link; 11 and 17 networks; 15, 17, 21...routers; 23...home agent (HA) to manage location; 25...mobile node (MN); 27...a correspondent node (CN).

### Best Modes for Carrying Out the Invention

In this description, MN represents a mobile node; HA represents a location-management node; and CN represents a node that is a communication correspondent for the mobile node. Both the MN and the HA have their respective uniquely-given network addresses in a home link. A foreign link represents a destination link to which the MN moves.

Actions of the MN will be described below. The MN has an IPv6 address (HoA: Home Address) that is uniquely identifiable in the network. The MN acquires an IPv6 address (CoA: Care of Address) that makes the location of the MN identifiable in a destination network. The MN notifies the HA of its location by the notification of the CoA. When the MN communicates with the CN, the MN notifies the CN of its location by notification of the CoA. After confirmation of the location registration, the MN retains a set of CoA and HoA with a Binding Update List individually for the HA and the CN.

Actions of the HA will be described as follows. The HA retains a set of CoA and HoA with a Binding Cache Entry in response to the location registration requested by the MN. Actions of the CN will be described as follows. The CN retains a set of CoA and HoA with a Binding Cache Entry in response to the location registration requested by the MN.

An example of the cancelling of location registration in the HA (Home de-registration) is the cancellation of the location registration in the HA at the time when the MN moves to a home link. An example of the cancelling of location registration in the CN (de-registration) is the cancellation of the location registration in the CN at the time when the MN moves to a home link or at an arbitrary timing that the MN determines.

Even when the processes of cancelling the location registration have been completed, the HA/CN receives a BU transmitted from the MN to request the cancelling of the location registration. On receiving the BU from the MN, the HA/CN transmits a BA in response to the BU. When the MN receives the BA, the MN deletes the Binding Update List, and thus the processes of cancelling the location registration are completed. The methods below show how the HA/CN receives the BU.

- The HA/CN is made capable of receiving a BU for a certain length of time since the HA/CN receives the first BU requesting the cancellation of the location registration. The HA/CN transmits a BA in response to the BU that the HA/CN receives during the above-mentioned period.

- As a second method, the HA/CN always transmits a BA in response to the BU transmitted from the MN.

Fig. 10 is a diagram illustrating a sequence for a communication system according to a first embodiment of the present invention. To begin with, as Fig. 10 shows, a BU (seq N) 151 is transmitted from a MN 25 to a HA 23. Note that the HA 23 here is characterized by the control that allows the HA 23 to transmit, in any case, a BA to the MN 25 in response to the reception of the BU 151. To be more specific, when the HA receives a BU 157 transmitted from the MN 25 and requesting the cancellation of the location registration, the HA 23 is designed to transmit a BA 161 to the MN 25 irrespective of whether the HA has or has not completed processes 155 of cancelling the location registration. As a consequence, when the MN 25 receives the BA, the MN 25 deletes the Binding Update List and thus can complete the processes of cancelling the location registration.

Note that, in Fig. 10, the HA transmits the BA in response within a certain period of time (for example, within 1 second) after the time when processes of cancelling the location registration are started. Such a limitation may be imposed on the HA that is designed to transmit the BA.

Subsequently, the MN transmits a new message representing the completion of the processes of cancelling the location registration in response to the BA that is a response to a massage from the HA/CN for the cancelling of the location registration. When the HA/CN receives the message transmitted from the MN and notifying the completion of the processes of cancelling the location registration, the HA/CN executes the processes of cancelling the location registration. When the MN detects the abnormal state in which the HA/CN has completed the processes of cancelling the location registration but the MN has not, the MN completes the processes of cancelling the location registration. The methods below show how the MN detects the abnormal state from the start of the sequence of the cancellation of the location registration until the completion thereof.

1) Any packet cannot be transmitted to the CN.

2) The HA or a router in the link transmits a notification packet to the MN in response to a packet transmitted from the MN for the reason that the packet is transmitted in accordance with a transmission method of the link before the movement.

3) The MN is notified of an abnormality in the packet transmitted from the CN.

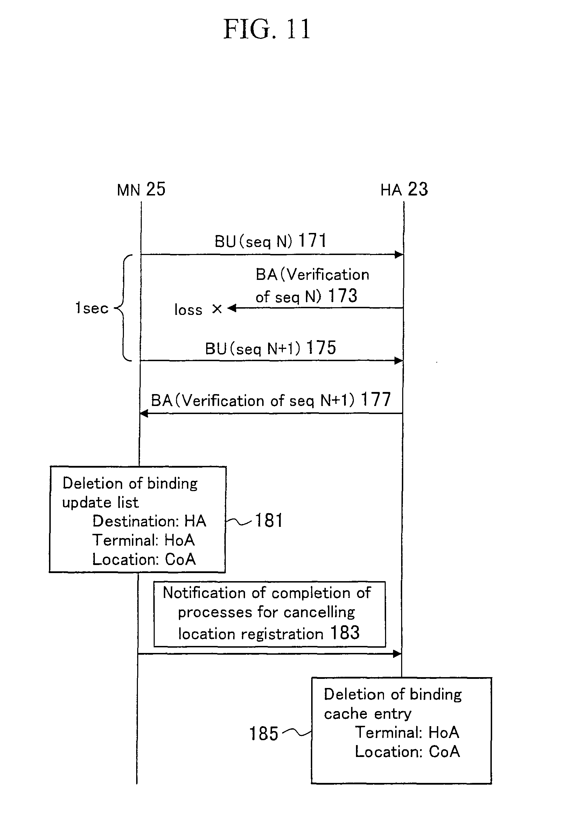

Fig. 11 is a diagram illustrating a sequence for a communication system according to a second embodiment of the present invention. To begin with, as Fig. 11 shows, a BU (seq N) 171 is transmitted from a MN 25 to a HA 23. Note that the HA 23 here is characterized by the control that allows the HA 23 to transmit, in any case, a BA to the MN 25 in response to the reception of the BU (171). To be more specific, when the HA receives a BU 171 transmitted from the MN 25 and requesting the cancellation of the location registration, the HA 23 is designed to transmit a BA 177 to the MN 25 irrespective of whether the HA has or has not completed processes of cancelling the location registration. As a consequence, when the MN 25 receives the BA, the MN 25 deletes the Binding Update List (181) and thus can complete the processes of cancelling the location registration (183: the deletion of the Binding Update List by the MN 25; 185: the deletion of the Binding Cache Entry by the HA 23).

Note that, in Fig. 10 and Fig. 11, the HA transmits the BA in response within a certain period of time (for example, within 1 second) after the time when processes of cancelling the location registration are started. Such a limitation may be imposed on the HA that is designed to transmit the BA.

Subsequently, a third embodiment of the present invention will be described below with reference to the drawings. Suppose a case where the loss of a packet for a BA, the delay of the network, the processing time in the HA or in the MN, or the like causes the MN to move before the MN receives the BA. In this case, the MN transmits another BU from a new link. The BU to be re-transmitted is transmitted by the MN while an IP address acquired in the new link is made to be the source address.

Since the source address of the MN is different from the link the location of which is managed by the HA and since the information on the location registration is deleted, the HA transmits an error message. The error message thus transmitted is assumed to be an ICMP error or a Binding error that can be implemented within the specification of the IPv6 or the MIPv6. Accordingly, the error notification by the HA can be implemented by a common technique. When the MN receives the error notification, the MN determines to delete the Binding Update List, and completes the processes of cancelling the location registration. In this event, the extension of the MN is accomplished. Note that the sequence that has been described thus far concerns the HA. The description of the sequence can also be applied to the CN.

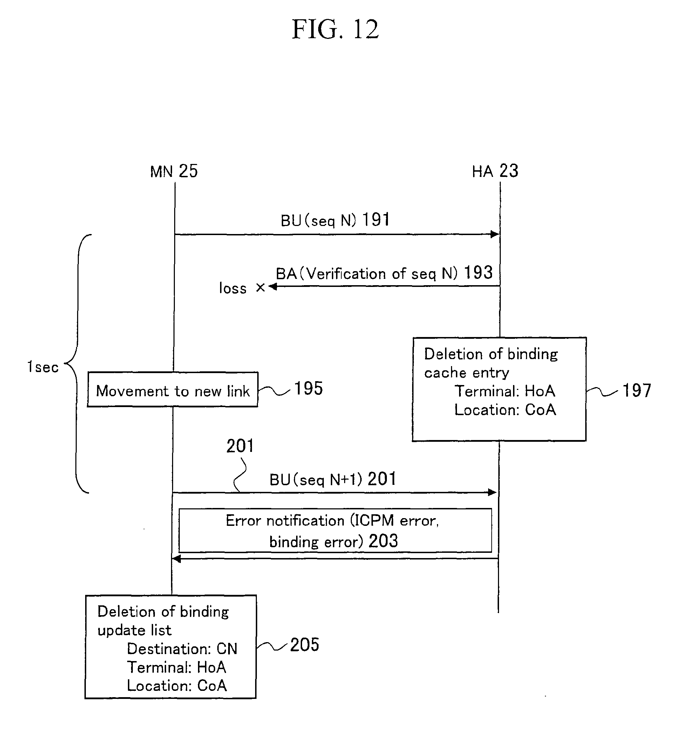

More detailed description will be given of the sequence. As Fig. 12 shows, a MN 25 transmits a BU (seq N) to a HA 23 (191). The HA 23 transmits a BA (verification of seq N) (193), but the packet of the BA is lost (loss). The MN 25 moves to a new link (195). The HA 23 deletes the Binding Cache Entry. Then, the MN 25 transmits a BU (seq N+1) to the HA 23 (201). The HA 23 transmits an error notification (203) to the MN 25. Some examples of the error notification are: an ICMP error; and a Binding error. When the MN 25 receives the error notification, the MN 25 deletes the Binding Update List (205). As described above, during a period after the notification of requesting the cancellation of the location registration until the completion of the processes of the location registration, a notification of abnormality is made for the reason that the network information represented by the source address of the packet transmitted by the mobile communication terminal to the communication correspondent is not the same as the link from which the packet is transmitted. Such a notification allows a mobile communication terminal to complete the processes of cancelling the location registration before the arrival of the response to the request for the cancellation of the location registration. As described above, the location-management apparatus (HA) and the communication apparatus (CN) that is a communication correspondent for the mobile communication terminal are made to respond to the request of the mobile communication terminal for the cancellation of the location registration even after the location registration has been cancelled. Accordingly, the mobile communication terminal (MN) can complete the processes of cancelling the location registration.

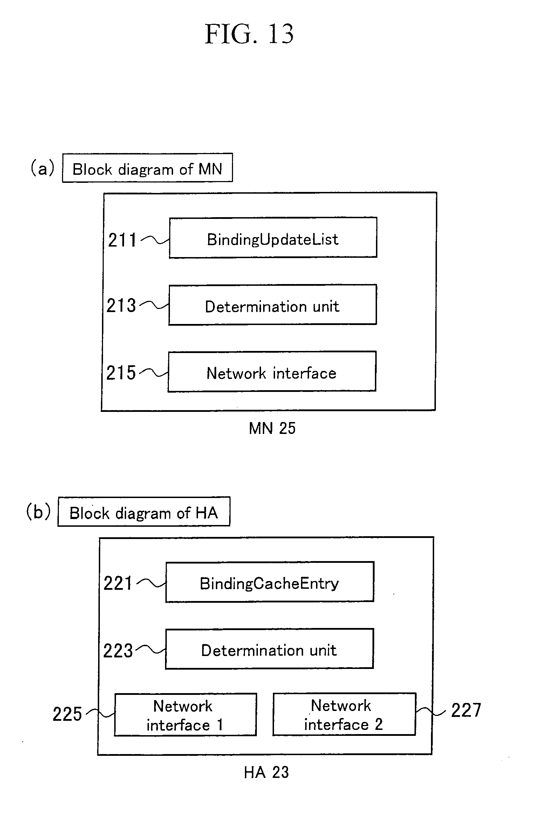

Now, description will be given of an exemplar configuration of each of the apparatuses MN, HA, and CN with reference to the drawings. The configurations are shared by all the above-described embodiments. Fig. 13A is a configuration block diagram illustrating an exemplar configuration of the MN. The MN is such a device as a PC, a PDA, a cellular phone, or the like. The MN has a common configuration with the protocol stack of MIPv6 being implemented. The MN 25 includes a Binding Update List 211, a determination unit 213, and a network interface 215. The determination unit 213 is the part designed to determine whether the Binding Update List 211 is or is not to be deleted. This is the characteristic point in all these embodiments. Other portions, that is, the network interface and the Binding Update List 211, have common configurations, respectively.

As Fig. 13B shows, the HA 23 includes a Binding Cache Entry 221, a determination unit 223, a network interface (1) 225, and a network interface (2) 227. The HA is a router apparatus that includes at least one network interface, and has a common configuration with the protocol stack of MIPv6 being implemented. Like the determination unit 213 of the MN 25, the determination unit 223 determines whether the Binding Cache Entry 221 is or is not to be deleted. This is the characteristic point. Each network interface and the Binding Cache Entry 221 have common configurations, respectively.

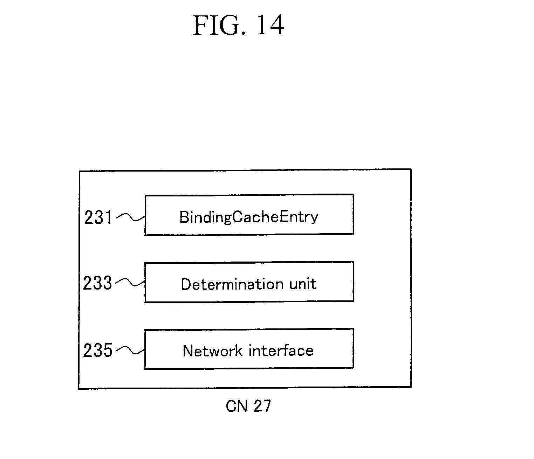

A CN 27 shown in Fig. 14 includes a Binding Cache Entry 231, a determination unit 233, and a network interface 235. The CN 27 is such a device as a PC, a PDA, or the like, and has a common configuration with the protocol stack of MIPv6 being implemented. The configuration in which the determination unit 233 executes a determination on the deletion of the Binding Cache Entry 231 is characteristic. Both the network interface to transmit and receive the packet, and the Binding Cache Entry 231 have common configurations, respectively.

As has been described thus far, according to the communication system of the above-described embodiments, when the MN carries out the procedure for cancelling the location registration in the HA/CN, a situation where the HA or the CN has completed the processes of cancelling the location registration but the MN has not completed the processes of cancelling the location registration can be prevented from occurring. Accordingly, the embodiments of the present invention have an advantageous effect of preventing the above-described state from making the communication impossible.

### Field of the Industrial Application

The present invention can be used in a communication system.

## Claims

1. A communication system including: a mobile communication terminal; a location-management apparatus connected to the mobile communication terminal via a network and managing the location of the mobile communication terminal; and a communication terminal being a communication correspondent of the mobile communication terminal,
the communication system **characterized in that,** in a state where the location-management apparatus has completed processes of cancelling the registration of the location of the mobile communication terminal, but the mobile communication terminal has not completed processes of cancelling the location registration, the location-management apparatus receives a request for cancelling the registration of the location of the mobile communication terminal, and transmits, to the mobile communication terminal, a response for cancelling the location registration.

2. A communication system including: a mobile communication terminal; a location-management apparatus connected to the mobile communication terminal via a network and managing the location of the mobile communication terminal; and a communication terminal being a communication correspondent of the mobile communication terminal,
the communication system **characterized in that,** in a state where the communication apparatus being the communication correspondent has completed processes of cancelling the registration of the location of the mobile communication terminal, but the mobile communication terminal has not completed processes of cancelling the location registration, the communication apparatus being the communication correspondent receives a request for cancelling the registration of the location of the mobile communication terminal, and transmits, to the mobile communication terminal, a response for the cancellation.

3. The communication system according to claim 1 **characterized in that** the request for cancelling the location registration is received by the location-management apparatus only during a period when the mobile communication apparatus may possibly transmit the request after the location-management apparatus completes processes of cancelling the location registration.

4. The communication system according to claim 2 **characterized in that** the request for cancelling the location registration is received by the communication apparatus only during a period when the mobile communication apparatus may possibly transmit the request again after the communication apparatus completes the processes of cancelling the location registration.

5. A location-management apparatus included in a communication system that includes: a mobile communication terminal; the location-management apparatus connected to the mobile communication terminal via a network and managing the location of the mobile communication terminal; and a communication terminal being a communication correspondent of the mobile communication terminal,
the location-management apparatus **characterized in that,** in a state where the location-management apparatus has completed processes of cancelling the registration of the location of the mobile communication terminal, but the mobile communication terminal has not completed processes of cancelling the location registration, the location-management apparatus receives a request for cancelling the registration of the location of the mobile communication terminal, and transmits, to the mobile communication terminal, a response for cancelling the location registration.

6. A communication apparatus included in a communication system that includes: a mobile communication terminal; a location-management apparatus connected to the mobile communication terminal via a network and managing the location of the mobile communication terminal; and the communication terminal being a communication correspondent of the mobile communication terminal,
the communication apparatus **characterized in that,** in a state where the communication apparatus being the communication correspondent has completed processes of cancelling the registration of the location of the mobile communication terminal, but the mobile communication terminal has not completed processes of cancelling the location registration, the communication apparatus being the communication correspondent receives a request for cancelling the registration of the location of the mobile communication terminal, and transmits, to the mobile communication terminal, a response for cancelling the location registration.

7. A mobile communication terminal included in a communication system that includes: the mobile communication terminal; a location-management apparatus connected to the mobile communication terminal via a network and managing the location of the mobile communication terminal; and a communication terminal being a communication correspondent of the mobile communication terminal,
the mobile communication terminal **characterized in that,** in response to a request for cancelling the registration of the location of the mobile communication terminal, the location-management apparatus transmits a response to the mobile communication terminal and executes processes of cancelling the location registration, and
the mobile communication terminal receives the response and notifies the location-management apparatus of the completion of the processes of cancelling the location registration.

8. A mobile communication terminal included in a communication system that includes: the mobile communication terminal; a location-management apparatus connected to the mobile communication terminal via a network and managing the location of the mobile communication terminal; and a communication terminal being a communication correspondent of the mobile communication terminal,
the mobile communication terminal **characterized in that,** in response to a request for cancelling the registration of the location of the mobile communication terminal, the communication terminal being the communication correspondent transmits a response to the mobile communication terminal and executes processes of cancelling the location registration, and
the mobile communication terminal executes processes of cancelling the location registration upon receipt of the response, and notifies the communication apparatus being the communication correspondent of the completion of the processes of cancelling the location registration.

9. A communication system including: a mobile communication terminal; a location-management apparatus connected to the mobile communication terminal via a network and managing the location of the mobile communication terminal; and a communication terminal being a communication correspondent of the mobile communication terminal,
the communication system **characterized in that** the mobile communication terminal completes processes of cancelling the location registration without waiting for the arrival of a response to a request for cancelling the location registration, when receiving a notification of abnormality during a period until the mobile communication terminal completes the processes for cancelling the location registration after transmitting the request for cancelling the location registration, the notification of abnormality being issued for the reason that the network information indicated by the source address of a packet transmitted from the mobile communication terminal to the communication correspondent is not the same as the link from which the packet is sent out.

10. A communication method used in a communication system including: a mobile communication terminal; a location-management apparatus connected to the mobile communication terminal via a network and managing the location of the mobile communication terminal; and a communication terminal being a communication correspondent of the mobile communication terminal,
the communication method **characterized by** comprising a step of, in a state where the location-management apparatus has completed processes of cancelling the registration of the location of the mobile communication terminal, but the mobile communication terminal has not completed processes of cancelling the location registration, causing the location-management apparatus to receive a request for cancelling the registration of the location of the mobile communication terminal, and to
transmit, to the mobile communication terminal, a response for cancelling the location registration.

11. A communication method used in a communication system including: a mobile communication terminal; a location-management apparatus connected to the mobile communication terminal via a network and managing the location of the mobile communication terminal; and a communication terminal being a communication correspondent of the mobile communication terminal,
the communication method **characterized by** comprising a step of, in a state where the communication apparatus being the communication correspondent has completed processes of cancelling the registration of the location of the mobile communication terminal, but the mobile communication terminal has not completed processes of cancelling the location registration, causing the communication apparatus being the communication correspondent to receive a request for cancelling the registration of the location of the mobile communication terminal, and to transmit, to the mobile communication terminal, a response for the cancellation.

12. A communication method used in a communication system including: a mobile communication terminal; a location-management apparatus managing the location of the mobile communication terminal; and a communication terminal being a communication correspondent of the mobile communication terminal,
the communication method **characterized by** comprising a step of causing the mobile communication terminal to complete processes of cancelling the location registration without waiting for the arrival of a response to a request for cancelling the location registration, when receiving a notification of abnormality during a period until the mobile communication terminal completes the processes for cancelling the location registration after transmitting the request for cancelling the location registration, the notification of abnormality being issued for the reason that the network information indicated by the source address of a packet transmitted from the mobile communication terminal to the communication correspondent is not the same as the link from which the packet is sent out.

13. A program that causes a computer to execute any one of the steps described in claims 10 to 12.

14. A computer-readable recording medium that stores the program described in claim 13.
